(19) Europäisches Patentamt
European Patent Office
Office européen des brevets

(11) **EP 2 113 955 B1**

(12) **EUROPEAN PATENT SPECIFICATION**

(45) Date of publication and mention
of the grant of the patent:
**06.01.2016 Bulletin 2016/01**

(51) Int Cl.:
***H01M 4/587*** *(2010.01)*     ***H01M 4/62*** *(2006.01)*
***H01M 10/0525*** *(2010.01)*     ***H01M 4/02*** *(2006.01)*
***H01M 4/04*** *(2006.01)*

(21) Application number: **09157770.0**

(22) Date of filing: **09.04.2009**

(54) **Negative electrode active material for a lithium rechargeable battery and lithium rechargeable battery comprising the same**

Negative Elektrode für eine wieder aufladbare Lithiumbatterie und wieder aufladbare Lithiumbatterie damit

Matériau actif d'électrode négative pour une batterie rechargeable au lithium et batterie rechargeable au lithium le comportant

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **29.04.2008 KR 20080039918**

(43) Date of publication of application:
**04.11.2009 Bulletin 2009/45**

(73) Proprietor: **Samsung SDI Co., Ltd.
Yongin-si, Gyeonggi-do (KR)**

(72) Inventors:
• **Kim, Bongchull
GYEONGGI-DO (KR)**

• **Hwang, Cheolhee
GYEONGGI-DO (KR)**
• **Kim, Dongyung
GYEONGGI-DO (KR)**
• **Park, Seho
GYEONGGI-DO (KR)**

(74) Representative: **Santarelli
49, avenue des Champs-Elysées
75008 Paris (FR)**

(56) References cited:
**WO-A1-2005/011030     US-A1- 2005 233 213
US-B1- 6 391 495**

**Description**

BACKGROUND OF THE INVENTION

Field of the Invention

The present invention relates to a negative electrode active material for a lithium rechargeable battery and a lithium rechargeable battery comprising the same.

Description of the Related Technology

Rechargeable batteries have been actively developed for lightweight and high function portable wireless devices such as video cameras, cellular phones and portable computers. Some examples of rechargeable batteries include nickel-cadmium batteries, nickel-hydrogen batteries, nickel-zinc batteries and lithium secondary batteries. Lithium rechargeable batteries have been widely used for advanced electronic device fields because they can be minimized to have high capacity, high operating voltage and high energy density per unit weight.

SUMMARY OF CERTAIN INVENTIVE ASPECTS

Certain aspects of the present invention provide a negative electrode active material with higher capacity comparing to commercialized graphite as a negative electrode active materials. Certain aspects also provide improved capacity retention during cycling of charging and discharging. Other aspects of the present invention provide a lithium rechargeable battery comprising the negative electrode active material.

According to one aspect of the present invention a negative electrode active material for a lithium rechargeable battery includes a graphite core configured to absorb and release lithium. The graphite core includes pores extending from an outer surface of the graphite core to an inside of the graphite core. The pores include metal particles having an average size of less than 600 nm and hard carbon.

In some embodiments the graphite core comprises agglomerated flaky graphite powder or massive graphite powder. In some embodiments the graphite core comprises agglomerated fine graphite powder of 1 to 15 $\mu$m. In some embodiments the pores comprise an agglomeration of the fine graphite powder. In some embodiments the pores comprise blow agent. In some embodiments the pores comprise a tubular shape or a plate shape. In some embodiments the pores comprise a mesh network inside the graphite core. In some embodiments a porosity of the pores is 10 to 50% of a total volume of the negative electrode active material. In some embodiments the metal particles comprise at least one material selected from the group consisting of aluminum (A1), silicon (Si), tin (Sn), lead (Pb), indium (In), bismuth (, Bi), arsenic (As), antimony (Sb) and silver (Ag). In some embodiments the metal particles comprise more than 5wt% of the entire negative electrode active material. In some embodiments the hard carbon is positioned so as to isolate the silicon particles from inner surfaces of the pores. In some embodiments the silicon particles are positioned on inner surfaces of the pores. In some embodiments the negative electrode material further includes hard carbon coated on the outer surface of the graphite core. In some embodiments the hard carbon comprises 10 to 15wt% of the negative electrode active material. In some embodiments the outer surface of the graphite core comprises hard carbon and metal particles. In some embodiments an average particle size of the negative electrode active material is 5 to 40 $\mu$m,

According to another aspect of the present invention a lithium rechargeable battery includes a positive electrode plate including a positive electrode active material configured to absorb and release lithium ions, a negative electrode plate including a negative electrode active material configured to absorb and release lithium ions, a separator interposed between the positive electrode and negative electrode plates and electrolyte configured to transport the lithium ions. The negative electrode active material includes a graphite core configured to absorb and release lithium, the graphite core includes pores extending from an outer surface of the graphite core to the inside of the graphite core and the pores comprising metal particles and hard carbon.

According to another aspect of the present invention a method of making a negative active material for a lithium battery includes providing a graphite core comprising pores, distributing metal particles into the pores by capillary action, coating the pores and an outer surface of the graphite core with a pitch carbon by mixing the pitch carbon with the graphite core, heating the pitch carbon to a temperature of 800°C to 1000°C for 2 to 4 hours so as to form amorphous carbon.

BRIEF DESCRIPTION OF THE DRAWINGS

An apparatus according to some of the described embodiments and the illustrated figures can have several aspects, no single one of which necessarily is solely responsible for the desirable attributes of the apparatus. The above and other aspects, features and advantages of the present invention will be more apparent from the following "Detailed Description" taken in conjunction with the accompanying drawings. After considering this discussion one will understand how the features of this invention provide advantages that include the ability to make and use the present invention.

FIG. 1 is a schematic sectional view illustrating a lithium rechargeable battery.
FIG. 2 is a perspective view illustrating a negative electrode plate included in the lithium rechargeable battery.
FIG. 3 is a magnified view of region "A" shown in FIG. 2.
FIG. 4 is a magnified sectional view illustrating the negative electrode active material shown in FIG. 3.
FIG. 5a is a magnified photograph illustrating cross-sectional image of the negative electrode active material according to one aspect of the present invention.
FIG. 5b is a magnified photograph illustrating a surface image of the negative electrode active material according to one aspect of the present invention.

## DETAILED DESCRIPTION OF EXEMPLARY EMBODIMENTS

Hereinafter, preferred embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

Lithium metal has a high energy density and has been conventionally proposed as the negative electrode active material of the lithium rechargeable battery. However, dendrite forms in the negative electrode during charging and causes an internal short by penetrating into a separator and reaching the positive electrode plate in subsequent charging/discharging. The deposited dendrite rapidly increases reactivity according to increase of specific surface area of a lithium electrode and reacts with electrolyte in a surface of the electrode to form polymer film having no electronic conductivity. Accordingly, resistance of the battery may be rapidly increased. Further, particles may be isolated from electron conduction network, which thereby prevent discharge.

Accordingly, a rechargeable battery has been developed using graphite capable of absorbing and releasing lithium ions as the negative electrode active material instead of the lithium metal. Generally, lithium metal is not deposited from graphite as the negative electrode active material. Thus, an internal short due to dendrite does not occur and there is no additional disadvantage. However, graphite has problems that a theoretical lithium absorbing capacity of graphite is 372mAh/g, which is very small capacity corresponding to 10% of theoretical capacity of the lithium metal and degradation of a lifetime is severe.

To solve the above described problems, negative electrode active materials made of metal or intermetallic compound have been actively researched. However, active materials comprising metal have disadvantages in that electro-chemical reversibility, charge/discharge efficiency and charge/discharge capacity are very quickly degraded during electro-chemical cycling even though the theoretical discharge capacity is very high.

Certain aspects of the present disclosure provide a negative electrode active material with improved charge/discharge efficiency. According to one aspect of the present invention a negative electrode active material for a lithium rechargeable battery includes a graphite core configured to absorb and release lithium. The graphite core includes pores extending from an outer surface of the graphite cores to an inside of the graphite core. The pores include metal particles and amorphous carbon. Other aspects of the present invention provide a lithium rechargeable battery comprising the negative electrode active material.

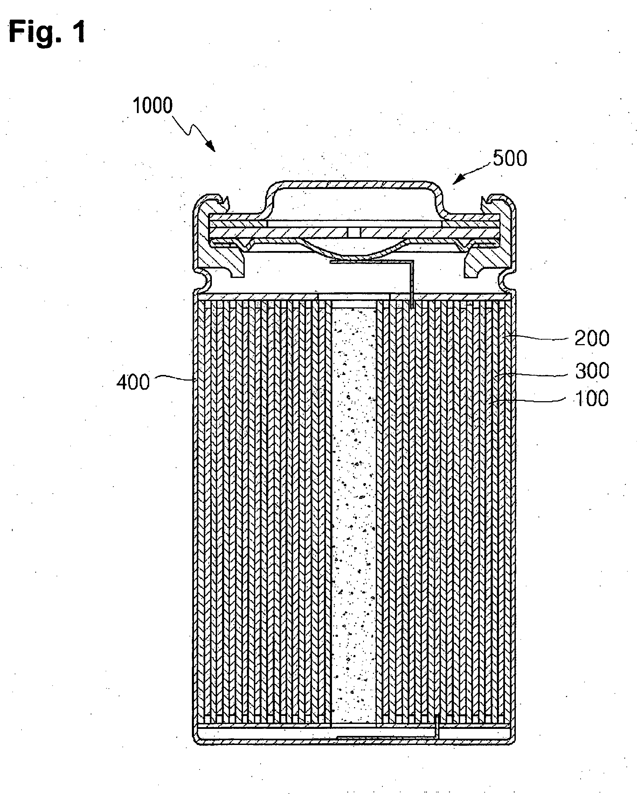

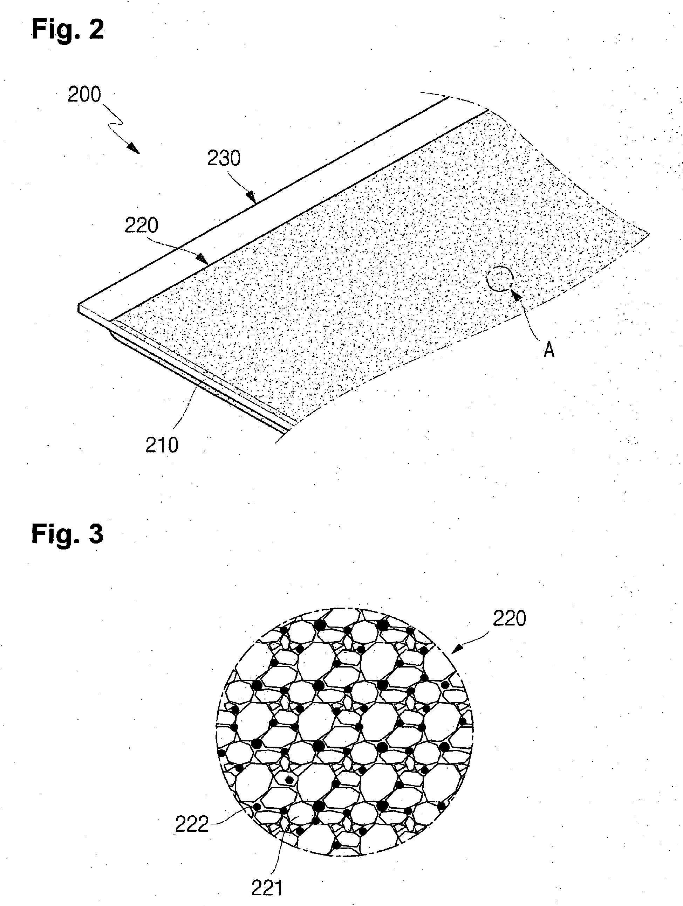

FIG. 1 is a schematic sectional view illustrating a lithium rechargeable battery according to one aspect of the present invention. The lithium rechargeable battery illustrated in FIG. 1 is cylindrical. It will be recognized that lithium rechargeable batteries of the present disclosure may be formulated in variety of shapes. For example, the technology of the present disclosure may be applied in a prismatic or a pouch-type rechargeable battery. FIG. 2 is a schematic perspective view illustrating a negative electrode plate included in the lithium rechargeable battery of FIG. 1. FIG. 3 is a magnified view of region "A" shown in FIG. 2.

Referring to FIGS. 1, 2 and 3, the lithium rechargeable battery 1000 includes positive electrode and negative electrode plates 100 and 200, a separator 300 and electrolyte (not shown) permeated into the positive electrode and negative electrode plates 100 and 200 and separator 300.

The positive electrode plate 100 is formed by coating a positive electrode active material layer (not shown) containing lithium oxide as a main component on both surfaces of a positive electrode collector (not shown) formed of thin aluminum foil. In addition, a positive electrode non-coating portion (not shown) is formed in a predetermined region on both ends of the positive electrode collector, where the positive electrode non-coating portion is a region that is not coated with the positive electrode active material. Compounds (lithiated intercalation compounds) capable of reversible intercalation or deintercalation of lithium such as $LiMn_2O_4$, $LiCoO_2$, $LiNiO_2$, $LiFeO_2$ can be used for the positive electrode active material layer.

The negative electrode plate 200 comprises a negative electrode coating portion 220 by coating a negative electrode active material 221 on both surfaces of a negative electrode collector 210 formed of thin copper foil. In addition, a negative electrode non-coating portion 230 is formed on both ends of the negative electrode collector 210, where the negative electrode non-coating portion is a region that is not coated with a negative electrode active material 221.

On the other hand, the negative electrode active material 221 is formed by forming pores in a graphite core and providing metal particles and pitch carbon in the pores. Thus, the negative electrode active material 221 includes metal particles surrounded by the pitch carbon or graphite core, or metal particles surrounded by the graphite core. Accordingly, volume expansion of the metal particles is prominently inhibited according to proceeding of charge/discharge. Further, crack generation caused by the volume expansion of the metal particles is prevented. In other words, a theoretical discharge capacity is very high and simultaneously electro-chemical reversibility and charging/discharging efficiency are prominently increased because the metallic negative electrode active material is used according to the embodiment. The construction of the negative electrode active material is discussed further below.

A binder 222 fixes the negative electrode active material 221 to the negative electrode collector 210. The binder 222 may include fluorine-containing binders such as PVdF and copolymer of vinylidene chloride or SBR binder. When SBR binder is used, it may further include thickener (not shown). Generally, the binder is desirably 0.8 to 10 wt% to total weight of the entire negative electrode active material forming the negative electrode active material layer. When the content of the binder is less than the above described range, bonding strength between the negative electrode active material 221 and negative electrode collector 210 is insufficient. When the content of the binder exceeds the above described range, the content of the negative electrode active material 221 is reduced as much as the excess amount. Accordingly, it is difficult to obtain high capacity of the battery.

The separator 300 may include porous material that can interrupt electron conduction between the positive electrode and negative electrode plates 100 and 200, and allow lithium ions to move smoothly. The separator 300 may include polyethylene (PE), polypropylene (PP) or composite film thereof. The separator 300 may comprise a coating ceramic material on the positive electrode plate 100 or negative electrode plate 200 side in addition to the film separator. Thus, stability for the internal short of the lithium rechargeable battery can be improved by compensating thermal defect of the film separator.

The electrolyte (not shown) includes non-aqueous organic solvent and lithium salt that function as medium for movement of ions reacting in electro-chemical reaction of the battery. The electrolyte may be formed by dissolving one lithium salt or mixture of at least two lithium salts selected from $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiN(C_xF_{2x}+1SO_2)(C_yF_{2y}+1SO_2)$ (x and y are natural numbers), $LiCl$ and $LiI$ into a non-proton solvent or mixture of at least two solvents selected from propylene carbonate, ethylene carbonate, butylene carbonate, benzonitrile, acetnitrile, tetrahydrofuran, 2-methyltetrahydrofuran, $\gamma$-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, dimethyl carbonate, methylethyl carbonate, diethyl carbonate, methylpropyl carbonate, methylisopropyl carbonate, ethylpropyl carbonate, dipropyl carbonate, diisopropyl carbonate, dibutyl carbonate, diethyleneglycol, or dimethyl ether.

A can 400 provides a predetermined space for receiving the positive electrode and negative electrode plates 100 and 200 and separator 300. The can 400 may be made of metal or any other suitable material known in the art. The can 400 may also function as a terminal. An opened upper part of the can 400 is finished by a cap assembly 500.

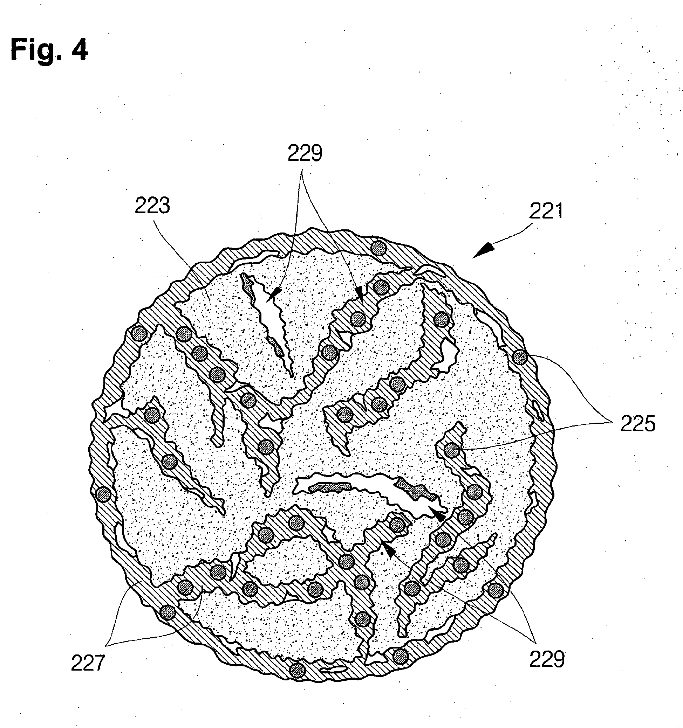

The negative electrode active material included in the lithium rechargeable battery according to one exemplary embodiment will be explained in more detail with reference to FIG. 4 below.

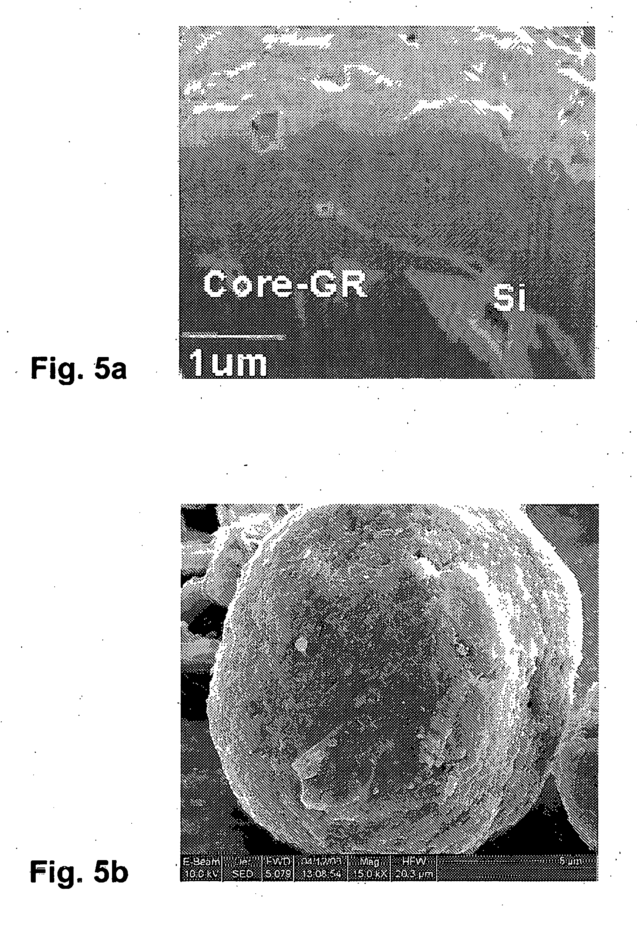

As noted above in the Brief Description of the Drawings, FIG. 4 is a sectional view illustrating a structure of the negative electrode active material according to one exemplary embodiment and FIG. 5a and 5b are a magnified photograph illustrating the negative electrode active material. FIG. 5a is a magnified photograph illustrating cross-sectional image of the negative electrode active material 221. FIG. 5b is a magnified photograph illustrating a surface image of the negative electrode active material 221. The negative electrode active material 221 includes a graphite core 223, metal nano-particles 225 provided in pores 229 of the graphite core 223 and hard, , carbon 227 filled in the pores 229 with the metal nano-particles 225.

Reversible intercalation or deintercalation of lithium ions is performed by the graphite core 223. The graphite core 223 is usually formed in spherical shape by agglomerating flaky graphite or massive graphite powder. Agglomeration of the graphite powder may be performed by an agglomerating apparatus. When the graphite powder is dropped from a predetermined height, edges of the graphite powder collide with a wall surface and thus are bent. Thus, the flaky graphite or graphite powder may be agglomerated for use in the graphite core 223. The fine graphite powder particles used generally are of 1 to 15 $\mu$m. When the size of the graphite powder particles is less than 1 $\mu$m, the metal nano-

particles 225 cannot be easily distributed into the pores because porosity of the pores becomes less than 10 %. When the size of the graphite powder is more than 15 $\mu$m, strength of the graphite core 223 is prominently decreased because the porosity of the pores becomes larger than 15 %.

The graphite core 223 may be formed in a conical or cylindrical shape in addition to a complete spherical shape. Other methods for agglomerating the flaky graphite or the graphite powder include folding or bending edges of the flaky graphite. This agglomeration process provides the flaky graphite in air flow. The flaky graphite collides against the wall surface using a crusher.

By one of the above-mentioned (or other suitable) agglomeration processes a plurality of pores 229 are formed inside the graphite core 223. Further, by one of the above-mentioned agglomeration processes a plurality of pores 229 on the outside of the graphite core 223 are formed. Thus, the pores 229 may be formed inside the graphite core 223 or the pores 229 may comprise a tunnel type, which extends from the surface of the graphite core 223 to the inside of the graphite core 223. The tunnel that forms the pore may comprise a tubular shape or a plate shape. Thus, the irregularly formed pores 229 may comprise a mesh network structure inside the graphite core 223.

The porosity of the pores 229 formed in the graphite core 223 is 10 to 50% to the total volume of the negative electrode active material 221.
The porosity (P) is defined as

$$P\ (\%) = Vp\ /\ (Vp + Vg)\ *100$$

Vp : Volume of pores below 3 $\mu$m of diameter containing an active material
Vg : Volume of graphite without pore
Vp is measured by Hg-porosimeter [Micrometrics, model AutoPore IV 9520], and Vg is calculated with 2.26 g/cc of theoretical density of graphite.

Pores above 3 $\mu$m can be excluded from total pore volume measured by this porosimeter because the large pores may almost be formed between graphite powders and the porosity means the portion of pores inner powder. When the porosity of the pores 229 is less than 10%, the metal nano-particles 225 cannot be easily distributed into the pores. When the porosity of the pores 229 is more than 50%, the strength of the graphite core 223 is prominently decreased.

On the other hand, the pores may be formed by mixing, agglomerating and foaming the fine graphite powder containing blow agent. The volume occupied by the blow agent in the agglomerated graphite core may be 10% to 50%. Thus, a porosity of the blow agent may be 10% to 50% after foaming.

As mentioned above, a plurality of metal nano-particles 225 are provided in the pores 229. The metal nano-particles 225 may include at least one of aluminum (Al), silicon (Si), tin (Sn), lead (Pd), indium (In), bismuth (Bi), arsenic(As), antimony (Sb) and silver (Ag). When the graphite core provided with the pores is dipped into alcohol solution containing the metal nano-particles, the metal nano-particles 225 are irregularly distributed into the pores 229 by capillary phenomenon.

Generally, an average size of the metal nano-particles 225 is less than 600nm. When the average size of the metal nano-particles 225 is more than 600nm, the size of the metal nano-particles 225 is larger than an average width of the pores 229. Accordingly, it is difficult to distribute the metal nano-particles 225 into the pores. On the other hand, the metal nano-particles 225 can be more easily distributed into the pores according to decrease of the average size of the metal nano-particles 225. Thus, there is no lower limit to the size of the metal nano-particles 225.

Moreover, the metal nano-particles 225 generally comprise more than 5wt% of the entire negative electrode active material. When the metal nano-particles 225 comprise less than 5wt% of the total negative electrode active material the discharge capacity of the rechargeable battery is not increased. The discharge capacity is more increased according to increase of the content of the metal nano-particles 225. However, it is difficult to increase the content of the metal nano-particles 225 over 50wt% to the entire negative electrode active material by actual processes.

The amorphous carbon 227 may fill the inside of the pores 229 in which the metal nano-particles 225 have been provided. The amorphous carbon 227 is formed by filling pitch carbon in the pores 229 occupied by the metal nano-particles 225 and then heating the pitch carbon at the temperature of 800 to 1,000°C for 2 to 4 hours.

The amorphous carbon 227 included in the negative electrode active material 221 may be formed to isolate the metal nano-particles 225 from the inner surfaces of the pores 229. Thus, the hard carbon 227 may serve to prevent the metal nano-particles 225 from being directly contacted to the graphite core 223; the metal nano-particles 225 are surrounded by the amorphous carbon 227, which is further surrounded by the graphite core 223. Thus, the hard carbon 227 and the graphite core 223 prevent volume expansion of the metal nano-particles 225 caused by repetition of charging/discharging.

In addition, the plurality of pores 229 are filled with the amorphous carbon 227 and simultaneously the outer surface of the graphite core 223 may be covered by the amorphous carbon 227. Here, the amorphous carbon 227 is coated on the metal nano-particles 225 existing on the outer surface of the graphite core 223. Thus, the volume expansion of the metal nano-particles 225 is further impeded.

The amorphous carbon 227 may comprise 10 to 15wt% of the entire negative electrode active material. When the amount of the amorphous carbon 227 is less than 10wt% of the entire negative electrode active material, the metal nano-particles 225 and inner surfaces of the pores 229 are not sufficiently isolated from each other even if the porosity of the pores 220 is 30%, that is, the lowest value. When the amount of the amorphous carbon 227 is more than 15wt% of the entire negative electrode active material, the battery capacity is decreased because the amount of the amorphous carbon covering the surface of the graphite core is increased and thus the particle size of the entire negative electrode active material is increased.

The average particle size of the negative electrode active material including the graphite core, metal nano-particles and amorphous carbon manufactured as described above is 5 to 40 $\mu$m, which is an optimal average particle size for the rechargeable battery manufacturing processes such as electrolyte permeation.

The present invention will be further discussed with reference to desirable embodiments and comparison examples below. However, the following examples are intended to illustrate certain aspects of and not to limit the scope of the present disclosure.

Example 1

For fabrication of Si-carbon composite as negative active materials, first, a graphite core was formed by pouring flaky graphite powder having an average particle size of 5 $\mu$m into a blade type rotor mill and agglomerating the graphite powder by rotation force and friction force. The average particle size of the graphite core was 20 $\mu$m. In addition, porosity of the graphite core was 40%. Then, silicon was crushed into silicon nano-particles having an average particle size of 250 nm by a bead mill. The amount of silicon was 15wt% in the Si-carbon composite of negative electrode active material.

Next, solution of the silicon nano-particles was prepared by mixing the silicon nano-particles with alcohol. The graphite core was dripped into the solution of the silicon nano-particles. Then, the silicon nano-particles were distributed into internal pores of the graphite core by capillary phenomenon during dry process.

Next, pitch carbon comprising 10 wt% of the entire negative electrode active material was mixed with the graphite core at 150°C for 1h. In this mixing process, the pitch carbon was coated on the pores and outer surface of the graphite core and then heated at 900°C for 3 hours, in which heat treatment process, the pitch was melted and had lower viscosity and should partially be infiltrated into graphite core. Then 60 wt% of pitch remained as amorphous carbon after the heating. Thus, the negative electrode active material was obtained. The pitch carbon was changed into amorphous carbon during the heat treatment.

The Si-carbon composite materials as negative electrode active material, graphite powder as conductive material, styrene-butadiene rubber (SBR) and carboxymethyl cellulose (CMC) as binder were mixed in a weight ratio of 80:15 : 3 : 2 to prepare a negative slurry. The slurry was coated on a copper foil, dried and compressed by a roll press, thus manufacturing a negative electrode having width of 4.4 cm and a thickness of 100 $\mu$m. LiCoO$_2$ having an average particle diameter of 10 $\mu$m as a positive active materials, Super P (acetylene black) as a conductive agent, and polyvinylidenefluoride (PVdF) as a binder were mixed in a weight ratio of 94:3:3 in N-methyl-2-pyrrolidone (NMP) to prepare a positive slurry. The slurry was coated on an aluminum foil, dried, and compressed by a roll press, thus manufacturing a positive electrode having a width of 4.3 cm and a thickness of 140 $\mu$m. Between the manufactured positive and negative electrodes, a polyethylene porous film separator having a width of 4.6 cm and a thickness of 18 $\mu$m was interposed followed by winding and placing into prismatic cans. 2.9g of the electrolyte were injected into the cans, thus completing the fabrication of the prismatic-type lithium secondary battery cell.

Example 2

A negative electrode was obtained by performing the process described in Example 1 except that the average particle size of the silicon nano-particles was 160nm.

Comparison example 1

A negative electrode plate was obtained by performing the process described in Example 1 except that the silicon nano-particles were coated on the outer surface of the graphite core by using the process of drying mixing with Si and graphite core.

Comparison example 2

A negative electrode plate was obtained by performing the process described in Example 1 except that the silicon nano-particles were agglomerated with flaky graphite powder at the time of forming the graphite core. In this process, we selected the same graphite powder [average particle size: 5um] as that used for fabrication of graphite core in Example 1 and 2.

Capacity of battery cells of Example 1-2 and comparative Examples1-2 were measured by charging and discharging the batteries at 0.2 C rate. The capacity was 30% larger than the capacity of the cell using only graphite as negative electrode. Cycle life characteristics at room temperature of the battery cells of Examples 1-2 and Comparative Examples 1-2 were evaluated by 100 cycles of charging and discharging at 1 C rate.

Table 1

|  | Efficiency [discharge / charge capacity at 1st cycle] | Capacity retention (@ 50cycles) | Capacity retention (@100cycles) |
|---|---|---|---|
| Example 1 | 90.0% | 91% | 85% |
| Example 2 | 89.4% | 94% | 88% |
| Comparison Example 1 | 87.0% | 88% | 75% |
| Comparison Example 2 | 88.0% | 85% | 65% |

As shown in Table 1, capacity retention of the batteries according to the Examples 1 and 2 were excellent compared to the Comparison Examples. Capacity retention is calculated by

$$\text{Capacity retention (\%)} = \text{capacity at every cycle / capacity at first cycle}$$

Thus, having amorphous carbon surrounding the silicon nano-particles and the graphite core surrounding both the silicon nano-particles and the amorphous carbon as the silicon nano-particles absorb and release lithium improves the charge/discharge efficiencies of the batteries in Example 1 and Example 2, which batteries showed excellent efficiency as 99.4% (Example 1) and 99.6% (Example2) of average efficiencies between 1st and 100th cycle. The efficiencies at 1st cycle of Example 1 and Example 2 show better value than those of comparison Examples 1 and 2 and are similar to the efficiency of commercial graphite battery systems. These efficiencies at first cycle of this invention are also excellent compared to the other high capacity anode electrode materials which are metal oxide powder [P. Poizot, et al., Nature Vol 407,pp496 ~ 499 (2000)], metal alloy powder and metal-carbon composite powder prepared by mechanical milling method [S. D. Beattie, et al., J. of The Electrochemical Society, 155 (2) A158 ~ A163 (2008), O. Mao, et al., Electrochemical and Solid-State Letters, 2(1) 3~5 (1999)]

On the other hand, there was no structure surrounding the silicon nano-particles in the negative electrode active materials according to the Comparison Examples 1 and 2. Accordingly, volume change of the silicon nano-particles was not prevented. Thus capacity retention of Comparison Examples 1 and 2 were low compared to Examples 1 and 2. For example, in Comparison Example 2 a crack was generated in the silicon nano-particles and fine gaps were generated between the silicon nano-particles and the graphite core according to the volume change during charge/discharge. Thus, the cyclability was poor.

As described above, the negative electrode active material according to the present invention and the lithium rechargeable battery comprising the same produce the following effects: First, because the negative electrode active material comprises metal the theoretical charging capacity is increased. Second, because the new composite structure comprises metal infiltrated into core graphite and coated by amorphous carbon, it is effective to decrease the mechanical stresses induced by the large volume change and avoid troublesome reactions between metal and electrolyte, thereby increasing cyclability of battery.

The foregoing description details certain embodiments of the invention. It will be appreciated, however, that no matter how detailed the foregoing appears in the text, the invention can be practiced in additional ways. It should also be noted that the use of particular terminology when describing certain features or aspects of the invention should not be taken to imply that the terminology is being re-defined herein to be restricted to include any specific characteristics of the features or aspects of the invention with which that terminology is associated. Further, numerous applications are possible for devices of the present disclosure. It should therefore be understood by those of ordinary skill in the art that various replacements, modifications and changes in the form and details may be made therein without departing from the spirit and scope of the present invention as defined by the following claims. Therefore, it is to be appreciated that the above described embodiments are for purposes of illustration only and are not to be construed as limitations of the invention.

**Claims**

1. A negative electrode active material (221) for a lithium rechargeable battery, the negative electrode active material comprising:

   a graphite core (223) configured to absorb and release lithium, the graphite core comprising pores (229), the pores extending from an outer surface of the graphite core to an inside of the graphite core; and
   the pores housing metal particles (225) having an average size of less than 600 nm and hard carbon (227).

2. The negative electrode active material of Claim 1, wherein the graphite core comprises agglomerated flaky graphite powder or massive graphite powder.

3. The negative electrode active material of Claim 1, wherein the graphite core comprises agglomerated fine graphite powder of 1 to 15 $\mu$m.

4. The negative electrode active material of Claim 1, wherein the graphite core is formed by agglomerating flaky graphite powder or massive graphite powder.

5. The negative electrode active material of Claim 3, wherein the pores comprise an agglomeration of the fine graphite powder.

6. The negative electrode active material of anyone of the preceding Claims, wherein the pores comprise blow agent.

7. The negative electrode active material of anyone of the preceding Claims, wherein the pores comprise a tubular shape or a plate shape.

8. The negative electrode active material of anyone of the preceding Claims, wherein the pores comprise a mesh network inside the graphite core.

9. The negative electrode active material of anyone of the preceding Claims, wherein a porosity of the pores is 10% to 50% of a total volume of the negative electrode active material.

10. The negative electrode active material of anyone of the preceding Claims, wherein the metal particles comprise at least one material selected from the group consisting of aluminum (Al), silicon (Si), tin (Sn), lead (Pb), indium (In), bismuth (Bi), arsenic(As), antimony (Sb) and silver (Ag).

11. The negative electrode active material of anyone of the preceding Claims, wherein the metal particles comprise more than 5wt% of the entire negative electrode active material.

12. The negative electrode active material of anyone of the preceding Claims, wherein the hard carbon is positioned so as to isolate the silicon particles from inner surfaces of the pores.

13. The negative electrode active material of Claim 12, wherein the silicon particles are positioned on inner surfaces of the pores.

14. The negative electrode active material of anyone of the preceding Claims further comprising hard carbon coated on the outer surface of the graphite core.

15. The negative electrode active material of anyone of the preceding Claims, wherein the hard carbon comprises 10% to 15wt% of the negative electrode active material.

16. The negative electrode active material of anyone of the preceding Claims, wherein the outer surface of the graphite core comprises hard carbon and metal particles.

17. The negative electrode active material of anyone of the preceding Claims, wherein an average particle size of the negative electrode active material is 5 μm to 40 μm.

18. A lithium rechargeable battery (1000), comprising:

a positive electrode plate (100) including a positive electrode active material configured to absorb and release lithium ions;
a negative electrode plate (200) including a negative electrode active material configured to absorb and release lithium ions;
a separator (300) interposed between the positive electrode and negative electrode plates; and
electrolyte configured to transport the lithium ions,
**characterized by** a negative electrode active material as defined in anyone of claims 1 to 17.

19. A method of making a negative active material for a lithium battery, the method comprising:

providing a graphite core comprising pores;
distributing metal particles into the pores by capillary action;
coating the pores and an outer surface of the graphite core with a pitch carbon by mixing the pitch carbon with the graphite core ; and
heating the pitch carbon to a temperature of 800°C to 1000°C for 2 to 4 hours to form amorphous carbon.

**Patentansprüche**

1. Negative Elektrode (221) für eine wiederaufladbare Lithiumbatterie, wobei die negative Elektrode umfasst:

einen Graphitkern (223), ausgelegt zum Aufnehmen und Abgeben von Lithium, wobei der Graphitkern Poren (229) umfasst, wobei sich die Poren von einer Außenfläche des Graphitkerns zu einer Innenseite des Graphitkerns erstrecken; und
wobei die Poren Metallpartikel (225) mit einer mittleren Größe von kleiner als 600 nm und Hartkohlenstoff (227) aufnehmen.

2. Negative Elektrode nach Anspruch 1, wobei der Graphitkern agglomeriertes schuppiges Graphitpulver oder Pulver von massivem Graphit umfasst.

3. Negative Elektrode nach Anspruch 1, wobei der Graphitkern agglomeriertes feinkörniges Graphitpulver von 1 bis 15 μm umfasst.

4. Negative Elektrode nach Anspruch 1, wobei der Graphitkern durch Agglomerieren von schuppigem Graphitpulver oder Pulver von massivem Graphit gebildet wird.

5. Negative Elektrode nach Anspruch 3, wobei die Poren eine Agglomeration des feinkörnigen Graphitpulvers umfassen.

6. Negative Elektrode nach einem der vorangehenden Ansprüche, wobei die Poren ein Blähmittel umfassen.

7. Negative Elektrode nach einem der vorangehenden Ansprüche, wobei die Poren eine Röhrenform oder eine Plattenform umfassen.

8. Negative Elektrode nach einem der vorangehenden Ansprüche, wobei die Poren ein Netzwerk im Inneren des Graphitkerns umfassen.

9. Negative Elektrode nach einem der vorangehenden Ansprüche, wobei eine Porosität der Poren von 10 % bis 50 % eines Gesamtvolumens der negativen Elektrode beträgt.

10. Negative Elektrode nach einem der vorangehenden Ansprüche, wobei die Metallpartikel mindestens ein Material, ausgewählt aus der Gruppe bestehend aus Aluminium (Al), Silicium (Si), Zinn (Sn), Blei (Pb), Indium (In), Bismut (Bi), Arsen (As), Antimon (Sb) und Silber (Ag), umfassen.

**11.** Negative Elektrode nach einem der vorangehenden Ansprüche, wobei die Metallpartikel mehr als 5 Gew.-% der gesamten negativen Elektrode umfassen.

**12.** Negative Elektrode nach einem der vorangehenden Ansprüche, wobei der Hartkohlenstoff so positioniert ist, dass die Siliciumpartikel von den Innenflächen der Poren getrennt sind.

**13.** Negative Elektrode nach Anspruch 12, wobei die Siliciumpartikel an den Innenflächen der Poren positioniert sind.

**14.** Negative Elektrode nach einem der vorangehenden Ansprüche, weiterhin umfassend auf der Außenfläche des Graphitkerns aufgebrachten Hartkohlenstoff.

**15.** Negative Elektrode nach einem der vorangehenden Ansprüche, wobei der Hartkohlenstoff 10 Gew.-% bis 15 Gew.-% der negativen Elektrode umfasst.

**16.** Negative Elektrode nach einem der vorangehenden Ansprüche, wobei die Außenfläche des Graphitkerns Hartkohlenstoff und Metallpartikel umfasst.

**17.** Negative Elektrode nach einem der vorangehenden Ansprüche, wobei eine mittlere Teilchengröße der negativen Elektrode 5 $\mu$m bis 40 $\mu$m beträgt.

**18.** Wieder aufladbare Lithiumbatterie (1000), umfassend:

   eine positive Elektrodenplatte (100), umfassend ein zum Aufnehmen und Abgeben von Lithiumionen ausgelegtes Positivelektroden-Aktivmaterial;
   eine negative Elektrodenplatte (200), umfassend eine zum Aufnehmen und Abgeben von Lithiumionen ausgelegte negative Elektrode;
   einen Separator (300), eingefügt zwischen der positiven Elektrodenplatte und der negativen Elektrodenplatte; und
   Elektrolyt, ausgelegt zum Transportieren der Lithiumionen,
   **gekennzeichnet durch** eine negative Elektrode wie definiert in einem der Ansprüche 1 bis 17.

**19.** Verfahren zur Herstellung einer negativen Elektrode für eine Lithiumbatterie, wobei das Verfahren umfasst:

   Bereitstellen eines Poren umfassenden Graphitkerns;
   Verteilen von Metallpartikeln in den Poren durch Kapillarwirkung;
   Beschichten der Poren und einer Außenfläche des Graphitkerns mit einem kohlenstoffhaltigen Pech durch Vermischen des kohlenstoffhaltigen Pechs mit dem Graphitkern; und
   Erhitzen des kohlenstoffhaltigen Pechs auf eine Temperatur von 800 °C bis 1000 °C über 2 bis 4 Stunden unter Bildung von amorphem Kohlenstoff.

**Revendications**

**1.** Matériau actif d'électrode négative (221) pour batterie rechargeable au lithium, le matériau actif d'électrode négative comprenant :

   un coeur en graphite (223) conçu pour absorber et libérer du lithium, le coeur en graphite comprenant des pores (229), lesdites pores s'étendant à partir d'une surface extérieure du coeur en graphite pour pénétrer à l'intérieur du coeur en graphite ; et
   les pores hébergeant des particules métalliques (225) ayant une taille moyenne inférieure à 600 nm et du carbone dur (227).

**2.** Matériau actif d'électrode négative selon la revendication 1, dans lequel le coeur en graphite comprend une poudre agglomérée de graphite floconneux ou une poudre agglomérée de graphite massif.

**3.** Matériau actif d'électrode négative selon la revendication 1, dans lequel le coeur en graphite comprend une fine poudre de graphite agglomérée de 1 à 15 $\mu$m.

**4.** Matériau actif d'électrode négative selon la revendication 1, dans lequel le coeur en graphite est formé par agglomération d'une poudre de graphite floconneux ou d'une poudre de graphite massif.

**5.** Matériau actif d'électrode négative selon la revendication 3, dans lequel les pores comprennent une agglomération d'une fine poudre de graphite.

**6.** Matériau actif d'électrode négative selon l'une quelconque des revendications précédentes, dans lequel les pores comprennent un agent d'expansion.

**7.** Matériau actif d'électrode négative selon l'une quelconque des revendications précédentes, dans lequel les pores ont une forme tubulaire ou une forme de plaque.

**8.** Matériau actif d'électrode négative selon l'une quelconque des revendications précédentes, dans lequel les pores forment un réseau maillé à l'intérieur du coeur en graphite.

**9.** Matériau actif d'électrode négative selon l'une quelconque des revendications précédentes, dans lequel la porosité des pores est de 10 à 50 % du volume total du matériau actif d'électrode négative.

**10.** Matériau actif d'électrode négative selon l'une quelconque des revendications précédentes, dans lequel les particules métalliques comprennent au moins un matériau choisi dans le groupe constitué par l'aluminium (Al), le silicium (Si), l'étain (Sn), le plomb (Pb), l'indium (In), le bismuth (Bi), l'arsenic (As), l'antimoine (Sb) et l'argent (Ag).

**11.** Matériau actif d'électrode négative selon l'une quelconque des revendications précédentes, dans lequel les particules métalliques représentent plus de 5 % en poids du matériau actif d'électrode négative.

**12.** Matériau actif d'électrode négative selon l'une quelconque des revendications précédentes, dans lequel le carbone dur est positionné de façon à isoler les particules de silicium des surfaces intérieures des pores.

**13.** Matériau actif d'électrode négative selon la revendication 12, dans lequel les particules de silicium sont positionnées sur les surfaces intérieures des pores.

**14.** Matériau actif d'électrode négative selon l'une quelconque des revendications précédentes, comprenant en outre du carbone dur revêtu sur la surface extérieure du coeur en graphite.

**15.** Matériau actif d'électrode négative selon l'une quelconque des revendications précédentes, dans lequel le carbone dur représente 10 à 15 % en poids du matériau actif d'électrode négative.

**16.** Matériau actif d'électrode négative selon l'une quelconque des revendications précédentes, dans lequel la surface extérieure du coeur en graphite comprend du carbone dur et des particules métalliques.

**17.** Matériau actif d'électrode négative selon l'une quelconque des revendications précédentes, dans lequel la taille de particule moyenne du matériau actif d'électrode négative est de 5 à 40 $\mu$m.

**18.** Batterie rechargeable au lithium (1000), comprenant :

une plaque d'électrode positive (100) contenant un matériau actif d'électrode positive conçue pour absorber et libérer des ions lithium ;
une plaque d'électrode négative (200) contenant un matériau actif d'électrode négative conçue pour absorber et libérer des ions lithium ;
un séparateur (300) interposé entre les plaques d'électrode positive et d'électrode négative ; et
un électrolyte conçu pour transporter les ions lithium,
**caractérisée par** un matériau actif d'électrode négative tel que défini selon l'une quelconque des revendications 1 à 17.

**19.** Procédé de préparation d'un matériau actif d'électrode négative pour batterie au lithium, le procédé comprenant :

la fourniture d'un coeur en graphite comprenant des pores ;
la distribution de particules métalliques dans les pores par action capillaire ;

le revêtement des pores et d'une surface extérieure du coeur en graphite avec un carbone dérivé de brai par mélange du carbone dérivé de brai avec le coeur en graphite ; et

le chauffage du carbone dérivé de brai à une température de 800 à 1000°C pendant 2 à 4 heures pour former du carbone amorphe.

# Fig. 1

## Fig. 2

## Fig. 3

**Fig. 4**

**Fig. 5a**

**Fig. 5b**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P. POIZOT et al.** *Nature,* 2000, vol. 407, 496-499
- **S. D. BEATTIE et al.** *J. of The Electrochemical Society,* 2008, vol. 155 (2), A158-A163
- **O. MAO et al.** *Electrochemical and Solid-State Letters,* 1999, vol. 2 (1), 3-5